# FASCICULE DE BREVET EUROPEEN

(11) **EP 1 261 471 B1**
(45) Date de publication et mention de la délivrance du brevet: **27.08.2003**
(21) Numéro de dépôt: 00993792.1
(22) Date de dépôt: 26.12.2000
(51) Int. Cl.: B29C 49/42, B29C 49/78, B29C 49/06, B29C 49/58

(54) **MACHINE DE SOUFFLAGE DE RECIPIENTS COMPORTANT DES MOYENS D'ORIENTATION DES PREFORMES DANS LE MOULE DE SOUFFLAGE**
BLASFORMMASCHINE FÜR BEHÄLTER, DIE EINE VORRICHTUNG ZUR ORIENTIERUNG DER PREFORMS IM WERKZEUG ENTHÄLT
BLOW MOULDING MACHINE FOR CONTAINERS COMPRISING MEANS FOR ORIENTATING PREFORMS IN THE MOULD

(30) Priorité: 20.01.2000 FR 0000665
(43) Date de publication de la demande: 04.12.2002
(73) Titulaire: SIDEL, 76053 Le Havre Cedex (FR)
(72) Inventeur: DEROUAULT, Philippe, F-76053 Le Havre Cedex (FR); LOPES, Jean-Emmanuel, F-76053 Le Havre Cedex (FR)
(74) Mandataire: Siloret, Patrick
(86) Numéro de dépôt international: FR0003623
(87) Numéro de publication internationale: WO01053063

(56) Documents cités:
- FR-A- 2 706 876
- FR-A- 2 722 134
- FR-A- 2 736 299
- FR-A- 2 764 544
- US-A- 5 660 902
- US-A- 5 756 018

## Description

L'invention se rapporte au domaine des machines de fabrication de récipients en matériau thermoplastique.

L'invention se rapporte plus particulièrement aux machines de soufflage dans lesquelles on fabrique des récipients en matière plastique à partir d'une préforme préalablement obtenue par exemple par moulage par injection (voir par exemple US 5 736 018 et FR 2 706 876).

Une telle machine comporte au moins un poste de soufflage muni d'un moule de soufflage dans lequel une préforme est engagée de telle sorte qu'elle présente un col qui s'ouvre à l'extérieur du moule. Le poste de soufflage comporte une tuyère de soufflage qui est mobile entre une position escamotée et une position de soufflage dans laquelle elle est maintenue en appui étanche contre le moule ou contre le col de la préforme pour introduire du fluide de soufflage sous pression dans la préforme.

Des machines de ce type sont couramment utilisées pour assurer la fabrication de bouteilles et de pots en polyéthylène téréphtalate (PET). Pour obtenir une bonne précision de la forme de la bouteille, surtout dans les zones de formes complexes, on est amené à utiliser des pressions de soufflage relativement importantes. Ainsi, lorsque le fluide de soufflage est de l'air, le soufflage est généralement réalisé sous une pression d'environ 40 bars. Cette forte pression permet de plaquer le matériau de la préforme, précédemment chauffée, contre les parois qui forment l'empreinte du moule. Dans la plupart des machines, une tige d'étirage est introduite axialement à l'intérieur de la préforme pour venir en appui contre l'extrémité fermée du fond de la préforme en même temps que le fluide sous pression y est injecté. La tige d'étirage permet ainsi de commander au mieux la déformation axiale de la préforme au cours du soufflage du récipient.

Dans un tel procédé d'obtention d'un récipient, le col du récipient est donc formé directement à sa forme définitive dès le moulage par injection de la préforme. Ce col comporte généralement un filetage qui permettra le vissage du bouchon du récipient.

Dans certains cas, il sera nécessaire de respecter une orientation angulaire particulière de la préforme par rapport au moule de soufflage. Tel est le cas lorsque ni le corps du récipient que l'on veut former, ni le bouchon avec lequel on veut le refermer, ne sont des corps de révolution. Dans ce cas, on souhaite généralement que le bouchon, une fois complètement vissé sur le col du récipient, ait une orientation bien déterminée par rapport au corps, notamment pour des raisons esthétiques. Or, dans ce cas, c'est la disposition angulaire du filetage du col par rapport au corps du récipient qui déterminera la position finale du bouchon en fin de vissage.

Aussi, il est nécessaire de prévoir des moyens qui permettent d'orienter angulairement la préforme par rapport au moule de soufflage, puisque c'est ce dernier qui confère au corps du récipient sa forme definitive.

L'invention a donc pour but de proposer des moyens d'orientation de la préforme qui soient suffisamment précis pour garantir une parfaite orientation angulaire de la préforme tout au long de la production de la machine.

Dans ce but, l'invention propose une machine de soufflage de récipients thermoplastiques, du type comportant au moins un poste de soufflage comportant un moule de soufflage dans lequel est aménagée une cavité à la forme finale du récipient à produire, du type dans lequel une préforme préalablement réalisée par moulage par injection est engagée dans la cavité de telle sorte que seule une extrémité supérieure ouverte de la préforme, son col, dépasse à l'extérieur du moule, du type dans lequel le poste de soufflage comporte une tuyère de soufflage qui est amenée axialement en regard de l'extrémité ouverte de la préforme pour y injecter de l'air sous pression en vue du moulage de la préforme à la forme finale du récipient,
caractérisée en ce que le poste de soufflage est muni d'un dispositif d'orientation de la préforme dans le moule, ledit dispositif comportant :
- un organe de préhension de la préforme apte à saisir celle-ci par son col lorsqu'elle se trouve engagée dans la cavité du moule ;
- un dispositif d'entraînement en rotation de l'organe de préhension pour faire tourner la préforme autour de son axe ;
- un dispositif de détection d'au moins une position angulaire de référence de la préforme ; et
- des moyens de commande aptes à commander le dispositif d'entraînement pour provoquer la rotation de l'organe de préhension jusqu'à ce que le dispositif de détection détectent la position angulaire de référence de la préforme.

Selon d'autres caractéristiques de l'invention :
- les moyens de commande sont aptes à provoquer une rotation de l'organe de préhension et de la préforme d'un angle de décalage prédéterminé à partir de la position angulaire de référence ;
- l'organe de préhension est porté par la tuyère de soufflage ;
- le dispositif de détection de la position angulaire de référence de la préforme comporte un détecteur optique apte à détecter un repère agencé sur le col de la préforme ;
- la tuyère de soufflage comporte un corps de tuyère qui est mobile axialement entre une position escamotée haute et une position basse de travail, et le corps de tuyère peut être amené dans une position axiale intermédiaire d'orientation dans laquelle l'organe de préhension saisit la préforme pour pouvoir l'orienter angulairement ;
- le corps de tuyère, en se déplaçant de sa position escamotée vers position intermédiaire, entraîne avec lui l'organe de préhension qui passe d'une position escamotée à une position de préhension et d'orientation de la préforme, et, lorsque le corps de tuyère se déplace de sa position intermédiaire vers sa position de travail, l'organe de préhension demeure immobile et se déplace relativement au corps de tuyère à l'encontre de moyens de rappel élastique ;
- la tuyère de soufflage comporte, à son extrémité inférieure, une cloche qui, lorsque le corps de tuyère est en position de travail, vient en appui étanche contre une surface supérieure du moule, autour du col de la préforme, et la cloche est solidaire axialement du corps de tuyère, mais est mobile en rotation autour de l'axe de la tuyère ;
- la cloche et l'organe de préhension sont solidaires en rotation l'un de l'autre tout en étant mobiles axialement l'un par rapport à l'autre ;
- la cloche comporte une roue dentée externe par laquelle elle est entraînée en rotation par le dispositif d'entraînement ;
- la machine comporte plusieurs postes de soufflage qui sont montés sur un carrousel rotatif, et chaque poste de soufflage comporte un dispositif d'orientation de la préforme.

D'autres caractéristiques et avantages de l'invention apparaîtront à la lecture de la description détaillée qui suit ainsi que dans les dessins annexés dans lesquels :
- la figure 1 est une vue générale schématique en coupe axiale d'un exemple de réalisation d'un poste de soufflage selon l'invention ;
- les figures 2 à 4 sont des vues plus détaillées de la tuyère de soufflage et du dispositif d'orientation selon l'invention, la tuyère étant représentée respectivement dans ses trois positions axiales escamotée haute, intermédiaire d'orientation, et basse de travail ; et
- la figure 5 est une vue en perspective éclatée illustrant le système d'accouplement entre l'organe de préhension et la cloche de tuyère.

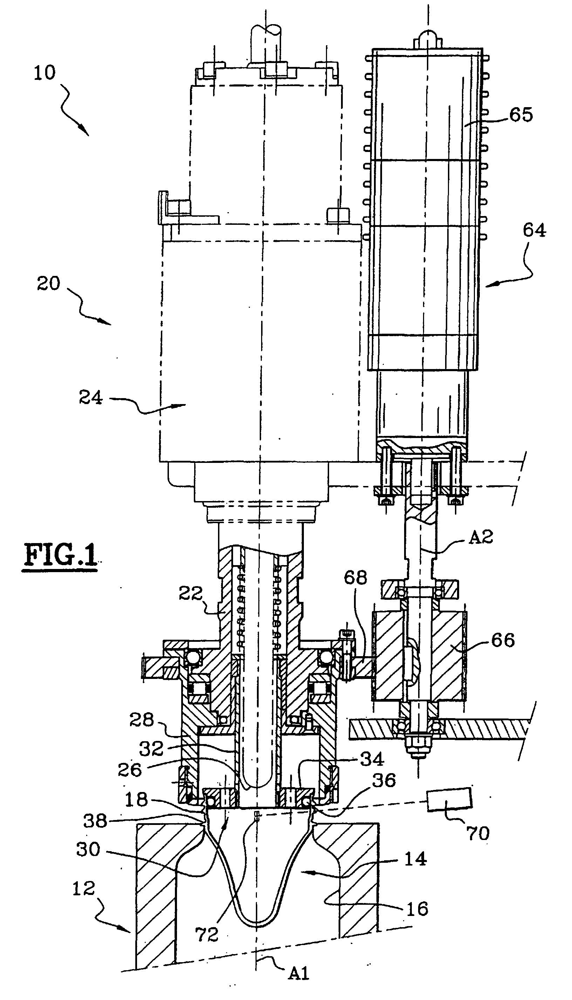

On a illustré sur la figure 1 un poste de soufflage pour une machine de soufflage de récipients. L'exemple illustré concerne une machine de soufflage de récipients à large col, aussi appelés pots, mais l'invention peut être adaptée pour d'autres machines, et notamment aux machine de fabrication de bouteilles.

Le poste de soufflage 10 comporte de manière connue un moule de soufflage 12 qui est réalisé généralement en deux ou trois parties mobiles l'une par rapport à l'autre pour permettre d'introduire une préforme 14 dans une cavité de moulage 16, formée à l'intérieur de ce moule 12, et pour permettre de retirer le récipient du moule après l'opération de soufflage.

La préforme 14 se présente sous la forme d'un corps creux qui est obtenu par moulage par injection et qui présente généralement une symétrie axiale de révolution. La préforme est ainsi fermée à une extrémité axiale, que l'on qualifiera arbitrairement d'inférieure, et elle est ouverte à son extrémité supérieure. Cette dernière, qui est destinée à former le col 18 du récipient, est cylindrique de révolution autour d'un axe A1 et elle est par exemple pourvue d'un filetage externe. Lorsque la préforme 14 est engagée dans le moule 12, seul le col 18 dépasse à l'extérieur du moule 12.

Dans l'exemple illustré, le poste de soufflage est configuré de telle sorte que le col 18 de la préforme 14 dépasse au-dessus de la face supérieure du moule 12. Ainsi, le poste de soufflage comporte une tuyère de soufflage 20 qui est agencée axialement au-dessus du moule 12, et qui est destinée à être amenée axialement vers le bas en regard du col de la préforme 14 pour y injecter de l'air sous pression et ainsi forcer le matériau du corps de la préforme à se déformer et à épouser la forme de la cavité 16 du moule 12.

On notera que les termes "supérieur", "inférieur", "haute", "basse", (etc...) utilisés dans le texte se réfèrent à la configuration du poste de soufflage tel qu'illustré sur les figures. Cependant, l'utilisation de ces termes ne doit pas être considérée comme une limitation à la portée de l'invention, laquelle trouvera aussi application avec d'autres orientations du poste de soufflage.

Selon une conception connue des machines de soufflage de la demanderesse, la tuyère de soufflage 20 comporte donc pour l'essentiel un corps de tuyère tubulaire 22 qui est mobile axialement dans un bloc porte-tuyère 24 fixe du poste de soufflage 10. Le bloc porte-tuyère 24 et le corps de tuyère 22 sont traversés selon l'axe A1 par une tige d'étirage 26 qui est commandée axialement par un vérin ou une came (non représentés) pour s'engager dans la préforme 14 et guider la déformation axiale de celle-ci au cours du soufflage.

Dans l'exemple illustré le poste de soufflage est équipé d'une tuyère cloche comparable à celle décrite dans le brevet français FR-2.764.544. Ainsi, le corps de tuyère 22 est muni à son extrémité inférieure d'une pièce en forme de cloche 28 qui est ouverte à son extrémité inférieure pour venir en appui étanche sur la face supérieure du moule 12, autour du col de la préforme 14 et non pas en appui sur ce dernier. Une fois la cloche 28 en appui sur le moule, la tuyère se trouve en communication étanche avec l'intérieur de la préforme pour y injecter du gaz sous pression

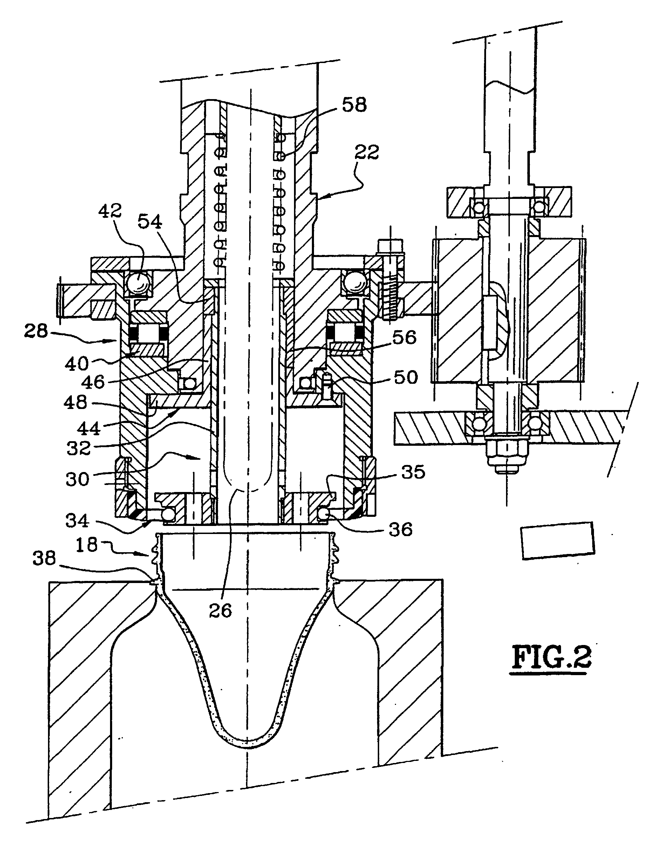

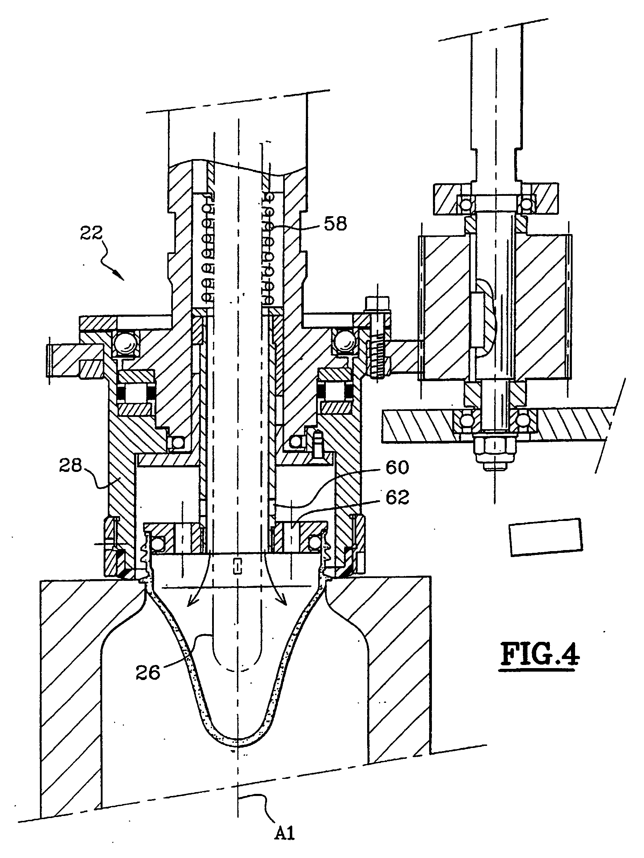

En effet, le corps de tuyère 22, et donc la cloche 28, peuvent être positionnés axialement selon au moins trois positions. A la figure 2, la tuyère se trouve en position escamotée haute dans laquelle elle permet le chargement de la préforme dans le moulé 12, puis le déchargement du récipient une fois formé. A la figure 4, la tuyère est illustrée en position de travail dans laquelle la cloche 28 est en appui sur le moule 12. Les déplacements de la tuyère peuvent être commandés de différentes façons, notamment à l'aide d'un système de vérin pneumatique étagé (non représenté).

Conformément aux enseignements de l'invention, le poste de soufflage comporte des moyens pour orienter la préforme 14 autour de l'axe A1 après qu'elle a été introduite dans le moule 12.

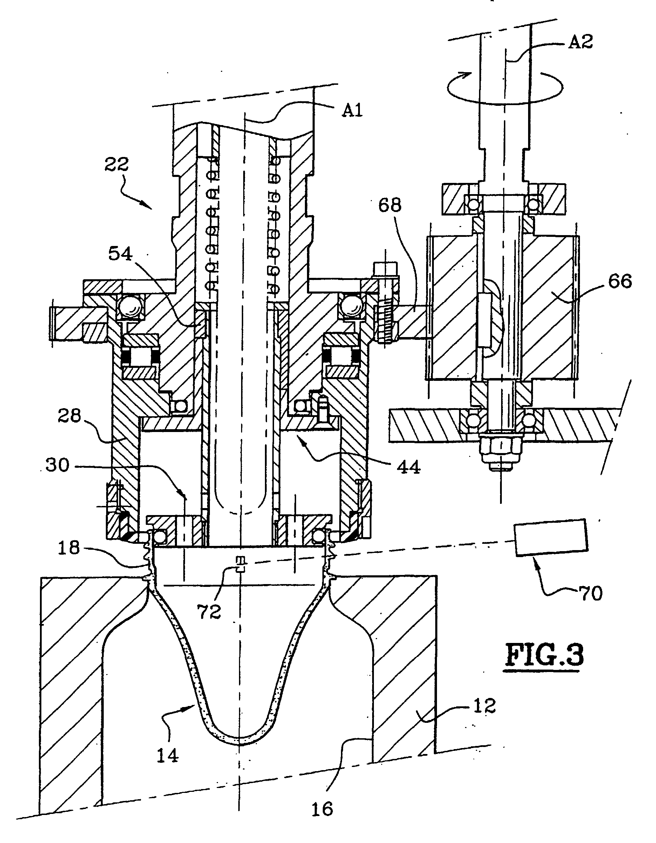

En effet, on peut voir que la tuyère de soufflage est équipée d'un organe de préhension 30 qui vient saisir la préforme 14 lorsque le corps de tuyère est déplacé axialement de sa position haute jusqu'à une position intermédiaire illustrée à la figure 3. Dans l'exemple de réalisation représenté sur les figures, l'organe de préhension 30 est reçu à l'intérieur de la cloche 28 et il est prévu pour saisir la préforme 14 par l'intérieur du col. Toutefois, en variante, on pourrait prévoir qu'il saisisse le col de la préforme par l'extérieur, notamment dans le cas de préformes présentant un col de plus petit diamètre.

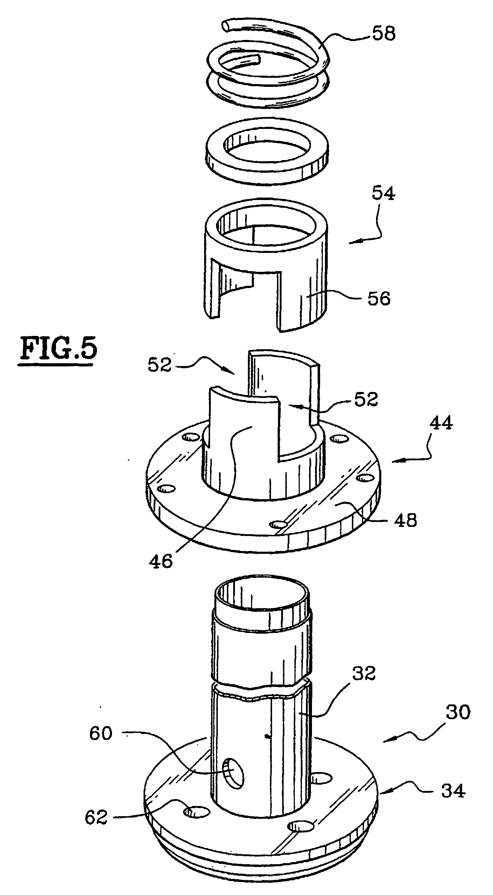

Comme on peut le voir notamment sur la figure 5, l'organe de préhension 30 comporte ainsi un fût 32 sensiblement tubulaire d'axe A1 à l'extrémité inférieure duquel est vissée une couronne annulaire 34 dont le diamètre externe correspond au diamètre interne du col de la préforme. A sa périphérie, la couronne 34 est pourvu d'un jonc élastique 36 qui assure le maintient de la préforme sur l'organe de préhension 30 lorsque la couronne 34 est engagée axialement dans le col de la préforme 14. Au moment de l'engagement, on profite avantageusement de la présence d'une collerette radiale externe 38 qui est agencée à la base du col 18 et qui permet à la préforme de s'appuyer sur la face supérieure du moule 12. La couronne 34 peut ainsi s'engager dans le col 18, malgré l'effort d'engagement dû à la présence du jonc 36. On voit sur les figures que la couronne 34 comporte un rebord supérieur 35 qui est susceptible de venir en appui sur le bord supérieur du col 18. Toutefois, la position intermédiaire de la tuyère 20 sera de préférence réglée de telle sorte que, pour cette position, le rebord 35 ne soit pas encore en appui sur le col 18 de la préforme 14.

Selon un aspect de l'invention, l'organe de préhension 30 est solidaire de la cloche 28 en rotation autour de l'axe A1, laquelle peut tourner autour de cet axe par rapport au corps de tuyère 22 à l'extrémité inférieure duquel elle est fixée. En revanche, la cloche 28 est solidaire axialement du corps de tuyère 22 mais l'organe de préhension peut coulisser axialement par rapport à cet ensemble lorsqu'il se déplace de sa position intermédiaire vers sa position basse de travail.

Pour ce faire, on peut voir tout d'abord que la cloche 28 est montée sur le corps de tuyère 22 avec interposition d'une butée à rouleaux 40 et d'un roulement à bille 22. La butée à rouleaux 42 peut ainsi encaisser les efforts axiaux qui apparaissent lorsque le corps de tuyère plaque la cloche 28 que le moule 12. Le roulement 42 assure un guidage précis de la rotation entre la cloche 28 et le corps de tuyère 22. Dans cette disposition, l'extrémité inférieure du corps de tuyère 22 est reçue à l'intérieur de l'extrémité supérieure de la cloche 28.

Au contraire, pour conserver une longueur de guidage suffisante, le fût de l'organe de préhension 30 s'étend à l'intérieur de l'extrémité inférieure du corps de tuyère 22. Pour lier en rotation la cloche 28 et l'organe de préhension 30, il est prévu une pièce de liaison 44 qui est solidaire de la cloche 28.

La pièce de liaison 44 comporte un tronçon tubulaire 46 qui s'étend axialement à l'intérieur du corps de tuyère 22 et qui est donc interposé radialement entre celui-ci et le fût 32 de l'organe de préhension 30. A l'extrémité inférieure du tronçon tubulaire 46, juste en dessous de l'extrémité inférieure du corps de tuyère 22, la pièce de liaison 44 présente un flasque annulaire 48 qui s'étend radialement vers l'extérieur et qui est fixé sur la cloche 28, par exemple par l'intermédiaire de vis 50. La pièce de liaison 44 est ainsi totalement solidaire de la cloche 28, tant en translation axiale, qu'en rotation autour de l'axe A1.

Comme on le voit sur la figure 5, l'extrémité supérieure du tronçon tubulaire 46 de la pièce de liaison 44 comporte deux entailles 52 à bords axiaux parallèles. Les deux entailles sont débouchantes à l'extrémité supérieure du tronçon tubulaire 46. De manière complémentaire, l'extrémité supérieure du fût 32 de l'organe de préhension 30 comporte une coiffe 54, en l'occurrence rapportée et soudée, qui comporte deux excroissances 56 de forme complémentaire de celles des entailles 52. Lorsque le fût 32 est reçu à l'intérieur du tronçon tubulaire de la pièce de liaison, les excroissances 56 de la coiffe rapportée 54 sont engagées dans les entailles 52 de manière à permettre un coulissement axial relatif de l'organe de préhension par rapport à la pièce de liaison. Au contraire, la coopération des excroissances 56 avec les entailles 52 empêche toute rotation relative de ces deux pièces. Ainsi, en plus d'assurer le guidage de l'organe de préhension 30, la pièce de liaison 44 permet à l'organe de préhension 30 de coulisser axialement par rapport à la cloche 28 tout en étant solidaire en rotation de cette dernière.

Comme on peut le voir sur les figures, la liberté de coulissement de l'organe de préhension 30 n'est pas totale. En effet, celui-ci est sollicité vers le bas par l'extrémité inférieure d'un ressort de compression 58 qui s'étend axialement à l'intérieur du corps de tuyère 22, et dont l'extrémité supérieure est en appui contre une surface de réaction de ce dernier. Ainsi, l'organe de préhension est sollicité vers le bas jusqu'à ce que les excroissances 54 la coiffe 56 arrivent en butée au fond des entailles 52 de la pièce de liaison 44. Cette position de repos de l'organe de préhension 30 est celle qui est illustrée sur les figures 2 et 3. On notera que l'effort exercé par le ressort 58 sur l'organe de préhension 30 doit être supérieur à l'effort axial d'engagement de la couronne 34 dans le col 18 de la préforme.

Lorsque le corps de tuyère 22 est commandé vers sa position basse de travail dans laquelle la cloche 28 vient se plaquer de manière étanche sur la face supérieure du moule, le rebord 35 de la couronne 34 empêche l'organe de préhension 30 de descendre plus avant car il est en appui sur la préforme, laquelle est à son tour en appui sur le moule. Aussi, la possibilité de coulissement relatif de l'organe de préhension et de la cloche est nécessaire pour permettre à la tuyère d'atteindre sa position basse, le ressort 58 se trouvant alors comprimé entre l'organe de préhension 30, qui reste fixe et le corps de tuyère 22 qui descend, comme cela est illustré à la figure 4.

Dans cette position de travail, on peut voir que la tige d'étirage 26 est susceptible de traverser axialement l'organe de préhension pour pénétrer à l'intérieur de la préforme 14, tout en laissant subsister un espace radial suffisant entre la tige 26 et la paroi interne du fût 32 pour que l'air sous pression puisse être injecté dans la préforme. On remarque aussi que des évents 60, 62 sont prévus dans le fût 32 et dans la couronne 34 de l'organe de préhension 30 pour permettre de conserver à tout moment un pression égale dans la tuyère 22, dans le récipient en cours de formation, et dans l'espace délimité par la cloche 28 au-dessus du moule, ceci afin d'éviter que le col 18 de la préforme 14 ne soit soumis à un différentiel de pression susceptible de le déformer. On remarquera que, lorsque la tuyère est en position de travail, la cloche est en appui sur le moule 12 et ne peut donc pas tourner autour de l'axe A1, ce qui bloque aussi toute rotation de l'organe de préhension 30. Ce dernier bloque alors à son tour toute rotation de la préforme 14, du simple fait de l'adhérence induite par l'effort axial qu'applique le ressort 58 qui est comprimé.

Au contraire, lorsque la tuyère est dans sa position intermédiaire illustrée à la figure 3, elle est susceptible d'être entraînée en rotation par un dispositif 64 du type de celui illustré à la figure 1. Ce dispositif comporte pour l'essentiel un moteur électrique 65 (ainsi que son module de commande) qui commande la rotation d'un pignon d'engrenage 66 d'axe A2 parallèle à l'axe A1. La cloche 28 comporte une roue dentée externe 68 qui engrène avec le pignon 66, de telle sorte que le moteur 65 peut faire tourner la cloche 28, et par son intermédiaire, l'organe de préhension 30. De préférence, le pignon présente une longueur axiale telle que le pignon 66 et la roue 68 restent toujours engrenés l'un avec l'autre, quelle que la position axiale de la cloche 28. En effet, bien que la liaison en rotation ne soit véritablement indispensable que lorsque la tuyère est en position axiale intermédiaire d'indexation, cette disposition permet d'éviter tout problème de ré-engrènement.

Comme on peut le voir sur les figures, le poste de soufflage selon l'invention comporte encore un dispositif de détection 70 d'une position angulaire de référence de la préforme. Dans l'exemple choisi, ce dispositif est un dispositif optique susceptible de détecter un repère aménagé sur le col 18 de la préforme 14. Il peut par exemple s'agir d'un dispositif à faisceau laser dirigé tangentiellement au col de la préforme et qui est alors capable de détecter un repère en relief 72 aménagé sur la préforme.

On peut aussi envisager de détecter de manière optique une entaille formée sur la collerette 38 ou une marque d'encre colorée. De même, on peut envisager d'utiliser un dispositif de détection électromécanique.

L'orientation de la préforme grâce au dispositif selon l'invention peut ainsi se faire en effectuant les étapes suivantes. La préforme 14 est d'abord introduite dans la cavité 16 du moule et ce dernier est au moins partiellement refermé. La tuyère 22, initialement en position haute escamotée, est descendue vers sa positon intermédiaire de manière que l'organe de préhension 30 puisse saisir la préforme 14 par le col 18.

Le moteur électrique 64 provoque la rotation de la cloche 28, laquelle entraîne l'organe de préhension 30 par l'intermédiaire de la pièce de liaison 44. Ce dernier fait ainsi pivoter la préforme 14 autour de son axe A1, la préforme n'étant pas serrée dans le moule 12. Lorsque le dispositif optique 70 détecte que le repère 72 a atteint une position prédéterminée, le système sait alors que la préforme atteint une position angulaire de référence par rapport au moule. Eventuellement, si on utilise un dispositif à grande vitesse de rotation et que l'inertie du moteur fait que la position de référence est dépassée au cours de cette première approche, on peut commander le moteur en sens contraire pour revenir à l'exacte position de référence.

A partir de cette position, on peut soit arrêter le moteur et maintenir la préforme dans la position de référence, soit faire tourner la cloche d'un angle de décalage prédéterminé pour amener la préforme à une nouvelle position angulaire qui restera parfaitement déterminée par rapport à la position de référence. Cette possibilité de décalage par rapport à la position de référence permet une grande liberté quant à la disposition du repère, lequel peut alors facilement être créer au moment du moulage par injection de la préforme en tenant compte des contraintes géométriques de démoulage.

Ensuite, la tuyère 22 peut être commandée vers le bas vers sa position de travail pour procéder au soufflage du récipient, et, une fois le soufflage effectué, la tuyère 22 peut être remontée directement vers sa position haute escamotée pour laquelle le récipient peut être dégagé du moule.

Avec un tel poste de soufflage, l'orientation de la préforme par rapport au moule au moment du soufflage peut être déterminée avec une grande précision, ceci dans un temps relativement court, par exemple inférieur à 500 ms. Ainsi, un tel poste de soufflage peut être intégré dans une machine de soufflage à grande cadence comportant plusieurs postes de soufflage répartis sur un carrousel rotatif entraîné en continu, chaque poste étant alors muni de son dispositif d'orientation.

L'invention vient d'être décrite en fonction du mode de réalisation préféré qui est illustré sur les figures. Ce mode de réalisation, qui fait appel à un détecteur optique, en fonction duquel est commandé un moteur électrique, permet d'obtenir des résultats de bonne précision quant à l'orientation de la préforme, et ceci avec un bonne répétabilité.

Cependant, d'autres variantes de réalisation sont possibles. Ainsi, le dispositif d'entraînement tel que décrit peut être remplacé par des systèmes équivalents. De la sorte, le moteur électrique pourrait être remplacé par un moteur pneumatique, ou encore, ce dispositif pourrait être réalisé sous la forme d'une crémaillère actionnée par un vérin électrique ou pneumatique et engrenant avec la roue dentée de la tuyère. De même, l'homme du métier parviendra sans difficulté à définir des variantes d'exécution de l'organe de préhension de la préforme, sans sortir du cadre de l'invention.

## Revendications

1. Machine de soufflage de récipients thermoplastiques, du type comportant au moins un poste de soufflage (10) comportant un moule de soufflage (12) dans lequel est aménagée une cavité (16) à la forme finale du récipient à produire, du type dans lequel une préforme (14) préalablement, réalisée par moulage par injection est engagée dans la cavité (16) de telle sorte que seule une extrémité supérieure ouverte de la préforme, son col (18), dépasse à l'extérieur du moule (12), du type dans lequel le poste de soufflage (10) comporte une tuyère de soufflage (20) qui est amenée axialement en regard de l'extrémité ouverte (18) de la préforme (14) pour y injecter de l'air sous pression en vue du moulage de la préforme à la forme finale du récipient, machine de soufflage dans laquelle le poste de soufflage (10) est muni d'un dispositif d'orientation de la préforme (14) dans le moule (12), ledit dispositif comportant :
- un organe de préhension (30) apte à saisir la préforme (14) par son col (18) lorsqu'elle se trouve engagée dans la cavité (16) du moule (12) ;
- un dispositif (64) d'entraînement en rotation de l'organe de préhension (30) pour faire tourner la préforme (14) autour de son axe (A1)
- un dispositif de détection (70) d'au moins une position angulaire de référence de la préforme (14) ; et
- des moyens de commande aptes à commander le dispositif d'entraînement pour provoquer la rotation de l'organe de préhension (30) jusqu'à ce que le dispositif de détection détectent la position angulaire de référence de la préforme (14).

2. Machine de soufflage selon la revendication 1, **caractérisée en ce que** les moyens de commande sont aptes à provoquer une rotation de l'organe de préhension (30) et de la préforme (14) d'un angle de décalage prédéterminé à partir de la position angulaire de référence.

3. Machine de soufflage selon l'une des revendications 1 ou 2, **caractérisée en ce que** l'organe de préhension (30) est porté par la tuyère de soufflage (20).

4. Machine de soufflage selon l'une quelconque des revendications 1 à 3, **caractérisée en ce que** le dispositif de détection de la position angulaire de référence de la préforme (14) comporte un détecteur optique apte à détecter un repère (72) agencé sur le col (18) de la préforme (14).

5. Machine de soufflage selon l'une des revendications 3 ou 4, **caractérisée en ce que** la tuyère de soufflage (20) comporte un corps de tuyère (22) qui est mobile axialement entre une position escamotée haute et une position basse de travail, et **en ce que** le corps de tuyère (22) peut être amené dans une position axiale intermédiaire d'orientation dans laquelle l'organe de préhension (30) saisit la préforme (14) pour pouvoir l'orienter angulairement.

6. Machine de soufflage selon la revendication 5, **caractérisée en ce que** le corps de tuyère (22), en se déplaçant de sa position escamotée vers position intermédiaire, entraîne avec lui l'organe de préhension (30) qui passe d'une position escamotée à une position de préhension et d'orientation de la préforme, et **en ce que**, lorsque le corps de tuyère (22) se déplace de sa position intermédiaire vers sa position de travail, l'organe de préhension (30) demeure immobile et se déplace relativement au corps de tuyère (22) à l'encontre de moyens de rappel élastique (58).

7. Machine de soufflage selon l'une des revendications 5 ou 6, **caractérisée en ce que** la tuyère de soufflage (20) comporte, à son extrémité inférieure, une cloche (28) qui, lorsque le corps de tuyère (22) est en position de travail, vient en appui étanche contre une surface supérieure du moule (12), autour du col (18) de la préforme (14), et **en ce que** la cloche (28) est solidaire axialement du corps de tuyère (22), mais est mobile en rotation autour de l'axe (A1) de la tuyère (20).

8. Machine de soufflage selon la revendication 7, **caractérisée en ce que** la cloche (28) et l'organe de préhension (30) sont solidaires en rotation l'un de l'autre tout en étant mobiles axialement l'un par rapport à l'autre.

9. Machine de soufflage selon la revendication 8, **caractérisée en ce que** la cloche (28) comporte une roue dentée externe (68) par laquelle elle est entraînée en rotation par le dispositif d'entraînement (64).

10. Machine de soufflage selon l'une quelconque des revendications précédentes, **caractérisée en ce qu'**elle comporte plusieurs postes de soufflage (10) qui sont montés sur un carrousel rotatif, et **en ce que** chaque poste de soufflage (10) comporte un dispositif d'orientation de la préforme.

## Patentansprüche

1. Maschine zum Blasformen thermoplastischer Behälter von der Art, die mindestens eine Blasformstation (10) umfasst, die eine Blasform (12) umfasst, in welcher ein Hohlraum (16) nach der endgültigen Form des herzustellenden Behälters vorgesehen ist, von der Art, bei der eine Vorform (14), die zuvor durch Spritzguss hergestellt wurde, derart in den Hohlraum (16) eingerückt wird, dass nur ein oberes offenes Ende der Vorform, nämlich ihr Hals (18), aus der Form (12) hervorsteht, von der Art, bei der die Blasformstation (10) eine Blasdüse (20) umfasst, die in Achsenrichtung gegenüber dem offenen Ende (18) der Vorform (14) geführt wird, um darin zum Formen der Vorform gemäß der endgültigen Form des Behälters Druckluft einzublasen, wobei die Blasformstation (10) dieser Blasformmaschine mit einer Vorrichtung zur Ausrichtung der Vorform (14) in der Form (12) versehen ist, wobei die Vorrichtung folgendes umfasst:
- ein Greiforgan (30), das die Vorform (14) an ihrem Hals (18) ergreifen kann, wenn sie in den Hohlraum (16) der Form (12) eingerückt ist;
- eine Vorrichtung (64) zum Drehantrieb des Greiforgans (30), um die Vorform (14) um ihre Achse (A1) zu drehen;
- eine Vorrichtung zur Erfassung (70) mindestens einer Bezugswinkelstellung der Vorform (14) und
- Steuermittel, die geeignet sind, um die Antriebsvorrichtung zu steuern, um die Drehung des Greiforgans (30) zu veranlassen, bis die Erfassunsvorrichtung die Bezugswinkelstellung der Vorform (14) erfasst.

2. Blasformmaschine nach Anspruch 1, **dadurch gekennzeichnet, dass** die Steuermittel geeignet sind, um eine Drehung des Greiforgans (30) und der Vorform (14) um einen vorherbestimmten Verschiebungswinkel von der Bezugswinkelstellung aus zu veranlassen.

3. Blasformmaschine nach Anspruch 1 oder 2, **dadurch gekennzeichnet, dass** das Greiforgan (30) von der Blasdüse (20) getragen wird.

4. Blasformmaschine nach einem der Ansprüche 1 bis 3, **dadurch gekennzeichnet, dass** die Vorrichtung zur Erfassung der Bezugswinkelstellung der Vorform (14) einen optischen Detektor umfasst, der dazu geeignet ist, eine Markierung (72) zu erfassen, die auf dem Hals (18) der Vorform (14) angebracht ist.

5. Blasformmaschine nach Anspruch 3 oder 4, **dadurch gekennzeichnet, dass** die Blasdüse (20) einen Düsenkörper (22) umfasst, der in Achsenrichtung zwischen einer eingezogenen oberen Stellung und einer unteren Arbeitsstellung verschiebbar ist, und dass der Düsenkörper (22) in eine axiale Zwischenausrichtungsstellung gebracht werden kann, in der das Greiforgan (30) die Vorform (14) ergreift, um sie winkelmäßig ausrichten zu können.

6. Blasformmaschine nach Anspruch 5, **dadurch gekennzeichnet, dass** der Düsenkörper (22), indem er sich von seiner eingezogenen Stellung in die Zwischenstellung begibt, das Greiforgan (30) mit sich nimmt, das von einer eingezogenen Stellung in eine Stellung zum Ergreifen und Ausrichten der Vorform geht, und dass, wenn der Düsenkörper (22) sich von seiner Zwischenstellung in seine Arbeitsstellung begibt, das Greiforgan (30) unbeweglich bleibt und sich mit Bezug auf den Düsenkörper (22) gegen elastische Rückstellmittel (58) bewegt.

7. Blasformmaschine nach Anspruch 5 oder 6, **dadurch gekennzeichnet, dass** die Blasdüse (20) an ihrem unteren Ende eine Glocke (28) umfasst, die, wenn der Düsenkörper (22) sich in der Arbeitsstellung befindet, auf einer oberen Fläche der Form (12) um den Hals (18) der Vorform (14) herum dicht aufliegt, und dass die Glocke (28) in Achsenrichtung mit dem Düsenkörper (22) fest verbunden, jedoch drehmäßig um die Achse (A1) der Düse (20) beweglich ist.

8. Blasformmaschine nach Anspruch 7, **dadurch gekennzeichnet, dass** die Glocke (28) und das Greiforgan (30) drehfest miteinander verbunden und dabei in Achsenrichtung zueinander beweglich sind.

9. Blasformmaschine nach Anspruch 8, **dadurch gekennzeichnet, dass** die Glocke (28) ein äußeres Zahnrad (68) umfasst, über das sie von der Antriebsvorrichtung (64) drehangetrieben wird.

10. Blasformmaschine nach einem der vorhergehenden Ansprüche, **dadurch gekennzeichnet, dass** sie mehrere Blasformstationen (10) umfasst, die auf einem Drehkarussell installiert sind, und dass jede Blasformstation (10) eine Vorrichtung zur Ausrichtung der Vorform umfasst.

## Claims

1. Machine for blow moulding thermoplastic containers, of the type comprising at least one blowing station (10) comprising a blow moulding mould (12) in which there is a cavity (16) with the final shape of the container that is to be produced, of the type in which a preform (14) produced beforehand by injection moulding is engaged in the cavity (16) in such a way that just an open top end of the preform, its neck (18), protrudes from the mould (12), of the type in which the blowing station (10) comprises a blowing nozzle (20) which is brought axially up to face the open end (18) of the preform (14) so that air can be injected thereinto under pressure with a view to moulding the preform to the final shape of the container, in which blow moulding machine the blowing station (10) is equipped with a device for orientating the preform (14) in the mould (12), the said device comprising:
- a gripper member (30) able to grasp the preform (14) by its neck (18) when the preform is engaged in the cavity (16) of the mould (12);
- a device (64) for driving the rotation of the gripper member (30) to turn the preform (14) about its axis (A1);
- a device (70) for detecting at least one reference angular position of the preform (14); and
- control means able to control the drive device to cause the gripper member (30) to rotate until the detection device detects the reference angular position of the preform (14).

2. Blow moulding machine according to Claim 1, **characterized in that** the control means are able to cause the gripper member (30) and the preform (14) to rotate through a predetermined offset angle from the reference angular position.

3. Blow moulding machine according to either of Claims 1 and 2, **characterized in that** the gripper member (30) is borne by the blowing nozzle (20).

4. Blow moulding machine according to any one of Claims 1 to 3, **characterized in that** the device for detecting the reference angular position of the preform (14) comprises an optical detector able to detect a mark (72) on the neck (18) of the preform (14).

5. Blow moulding machine according to either of Claims 3 and 4, **characterized in that** the blowing nozzle (20) comprises a nozzle body (22) that can move axially between a raised retracted position and a lowered work position, and **in that** the nozzle body (22) can be brought into an intermediate axial position of orientation in which the gripper member (30) grasps the preform (14) so as to be able to angularly orientate it.

6. Blow moulding machine according to Claim 5, **characterized in that** the nozzle body (22), in moving from its retracted position to its intermediate position, takes with it the gripper member (30) which moves from a retracted position to a position of gripping and orientating the preform, and **in that**, when the nozzle body (22) moves from its intermediate position to its work position, the gripper member (30) remains stationary and moves relative to the nozzle body (22) against the action of elastic return means (58).

7. Blow moulding machine according to either of Claims 5 and 6, **characterized in that** the blowing nozzle (20) comprises, at its lower end, a bell (28) which, when the nozzle body (22) is in the work position, bears with sealing against a top surface of the mould (12) around the neck (18) of the preform (14), and **in that** the bell (28) is axially secured to the nozzle body (22) but able to move in rotation about the axis (A1) of the nozzle (20).

8. Blow moulding machine according to Claim 7, **characterized in that** the bell (28) and the gripper member (30) rotate as one with one another while at the same time being able to move axially with respect to one another.

9. Blow moulding machine according to Claim 8, **characterized in that** the bell (28) comprises an external toothed wheel (68) via which it is rotated by the drive device (64).

10. Blow moulding machine according to any one of the preceding claims, **characterized in that** it comprises several blowing stations (10) mounted on a rotary carousel, and **in that** each blowing station (10) comprises a device for orientating the preform.
